# EUROPEAN PATENT APPLICATION

(11) **EP 1 701 512 A1**
(43) Date of publication of application: **13.09.2006**
(21) Application number: 05005305.7
(22) Date of filing: 10.03.2005
(51) Int. Cl.: H04L 29/08, H04L 29/06, A63F 13/12

(54) **A method of transmitting presence information**

(71) Applicant: SIEMENS AKTIENGESELLSCHAFT, 80333 München (DE)
(72) Inventor: Naumann, Mirko, 82538 Geretsried (DE)

(57) **Abstract**

A method of transmitting presence information (J11, K13; J13, K15) of a subscriber a) from a mobile terminal (101) to network (100), b) from a mobile terminal (101) to another mobile terminal (101B), or c) from network (100) to another mobile terminal (101B), the presence information (J11, K13; J13, K15) comprising at least one identifier identifying an application, especially a game, that has been installed on the mobile terminal (101). Independent claims also for a mobile terminal, a network and a system.

## Description

### Field of the invention

The invention relates to transmitting of presence information, to mobile terminals, to a network, and to a system comprising a network and a plurality of mobile terminals.

### Background art

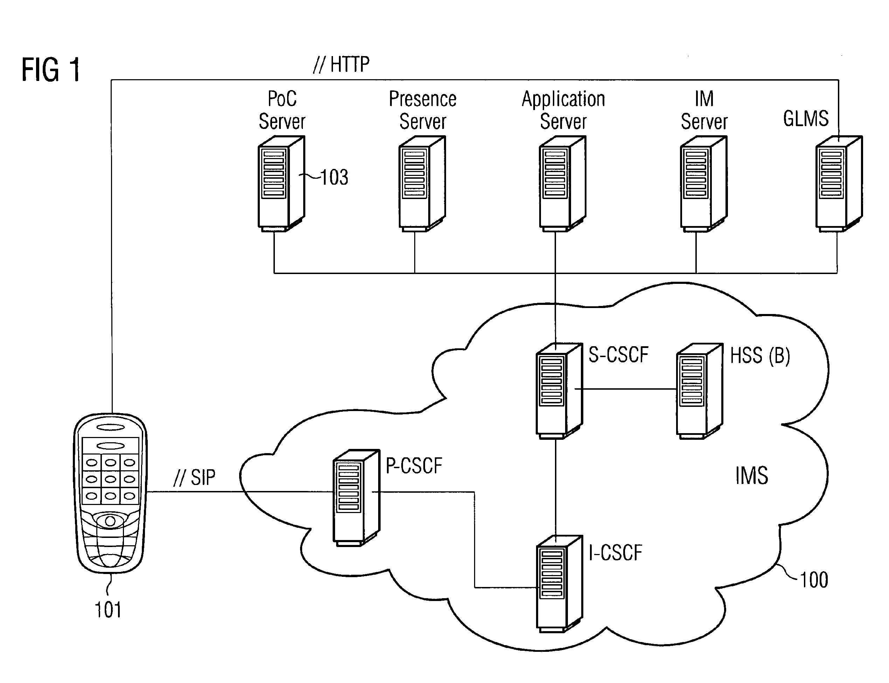

Figure 1 shows some network elements of an IP Multimedia Subsystem IMS network 100 that as the service network for packet-oriented services in a UMTS network builds the framework for many future services. A mobile terminal 101 is in connection to the IMS network 100 over a radio network that has been omitted from Figure 1 for simplicity.

The IMS has been specified in UMTS release 5 by the 3GPP, and it uses the Session Initiation Protocol SIP for signaling. An IMS network 100 comprises Proxy Call State Control Function P-CSCF, Serving CSCF S-CSCF and Interrogating CSCF I-CSCF. User data is stored in the Home Subscriber Server HSS.

An IMS network 100 typically comprises a presence server 103 for managing information about the current availability of a subscriber, i.e. whether a subscriber is currently available or not.

The instant message server (IM server) is used for caching of messages to subscribers that are currently not reachable and to resolving messages sent to a recipient group by transmitting the message to each member that the recipient group contains.

An IMS network 100 may further comprise a conference server for the Push-to-Talk over Cellular Service (PoC server), and a Group List Management Server GLMS which manages white lists, black lists, group lists and "buddy lists".

SIP is used for sending of Instant Messages with arbitrary contents and for exchanging presence information. The main task for which the SIP was specified was the initiation of sessions (or connections) over which arbitrary data can be exchanged between two end points, such as between two terminals. SIP is used, among others, for the PoC service. Further applications are Voice over Internet Protocol VoIP, video conferencing and multi player games.

A growing number of applications is being developed for IMS or can with a reasonable effort be made suitable for IMS. Therefore, it seems that an IMS network 100 is on the way to become a successful application platform for the UMTS networks. Because SIP was specified by the Internet Engineering Task Force IETF, it is by no means limited to mobile radio alone, but it suits extremely well for other applications taken into account the ongoing fixed-mobile convergence.

A large share of the new applications is expected to be games, especially online-games that can as multi-player games be played with a number of subscribers. A particular example of a multi-player game is a board game in Germany known as "Mensch ärgere Dich nicht" (in the English-speaking world known as Ludo), which derives from an ancient Indian racing game and can be played with any number of players.

Since the capabilities of mobile terminals are still increasing, it is to be expected that also an increasing number of applications other than games are going to be developed, especially applications which are to be used together with other people.

With this kinds of applications it is increasingly relevant that the potential partners have installed the same game.

It is a problem that a user of a mobile telephone cannot know whether there is a specific application installed in another mobile telephone.

The problem becomes particularly apparent if the application is a game which the user would like to play against the user of the other mobile telephone.

The problem occurs also when an application should be shared, or data from an application should be shared.

### Summary of the invention

In some prior art implementations of "buddy lists" presence is defined as whether a user is absent or present, e.g. available for text chat. A mechanism for automatically distributing information about online status of subscribers of a system has already been implemented into an IMS network 100. For this purpose, two different roles have been defined.

A presentity is a subscriber of a mobile terminal 101 who transmits his or her presence information to the system 100.

A watcher is a subscriber who is inquiring the presence information of a presentity. The watcher announces himself to the presentity by using SIP method SUBSCRIBE, and the presentity can with a help of a policy define whether the watcher is about to receive the information. If the watcher is authorized by the presentity, the system transmits presence information of the presentity to the watcher. As soon as this information changes, the watcher is informed accordingly. The subscription is valid for a predefined period of time, during which the watcher gets updates of the presence status of the presentity automatically. After the predefined time has expired, the watcher has to renew the subscription.

An object of the invention is to improve the awareness of a user of a mobile terminal about applications installed on another mobile terminal without requiring the user of the mobile terminal to directly ask about the applications from the user of the other mobile terminal. This object can be achieved as set out in any one of the independent patent claims 1, 10, 11, 12, or 13.

The dependent claims describe other advantageous embodiments of the invention.

### Advantages of the invention

If presence information of a subscriber is transmitted a) from a mobile terminal to network, b) from a mobile terminal to another mobile terminal, or c) from network to another mobile terminal, the presence information comprising at least one identifier identifying an application, especially a game, that has been installed on the mobile terminal, the user of the other mobile terminal can gain awareness of applications installed on the mobile terminal without directly asking about the applications from the user of the mobile terminal. User of mobile terminal sees immediately which games (or other applications) a friend has and can directly ask him or her to a match without asking in advance over chat and without calling to find out, whether the corresponding game has actually been installed. Furthermore, the users are encouraged to play more often, because they see which games the opponents have installed. Increased curiosity especially when one sees that someone else has a higher score.

If the transmitting of presence information to the network is performed using SIP PUBLISH method, the information can be made available for others in an easy manner. The information which application (such as game) has been installed is in the common presence information of the IMS and forms a decentralized set that better fits to the nature of SIP and IMS networks. The set if therefore decentralized because the applications (such as games) that are supported by the presence service are not limited to those supported by the game platform; likewise the information comes form the user and not from the application (or game) platform.

If the presence information transmitted to the network is made available for all mobile terminals authorized by the subscriber, the access control to the presence information can be controlled in a convenient manner.

If the presence information transmitted from the mobile terminal to the network is encoded in XML, or the presence information transmitted from the network to the other mobile terminal is encoded in XML, the browser in the other mobile terminal can handle the at least one identifier in the presence information effectively.

If a method for transmitting presence information further comprises the step of defining a policy for information about installed applications independently of the presence information, information about the installed applications may be retrieved by others without the user of the mobile terminal necessarily being at his mobile terminal or in the network.

If the presence information further comprises information enabling downloading of the application, especially a reference or a URL, the retrieval of the application by the user of the other mobile terminal can be made less complicated. If a user does not have the application (or the game), he or she can download the application (or game) by using the sent reference, with a consequence that the application will be used (or the game will be played) causing more traffic. In addition, the downloading of the application (or game) causes additional traffic. Because downloading the application by using the delivered reference makes the downloading simpler to the user, he or she is supposed to download more application in the long run.

If the other mobile terminal is adapted to offer the download or installation automatically, the downloading can be effected faster. On the contrary, if the other mobile terminal is adapted to offer the download or installation manually, better user control over the downloads can be achieved.

If the presence information further comprises highest score or official ranking obtained by the user of the mobile terminal, the user of the other mobile terminal may be in a position to better judge whether he or she would be willing to play a game or to use an application with the user whose presence information is being downloaded. Based on the highest score one can see how good a potential opponent is before the user plays against him or her.

### List of Figures

In the following, the invention is described in more detail by way of examples in the Figures 2 to 3B in the accompanying drawings, of which:
Figure 1 shows some network elements of an IP Multimedia Subsystem IMS network 100;
Figure 2 shows some messaging for transmitting presence information; and
Figures 3A and 3B show user views on presence information transmitted by the network.

Same reference numerals refer to similar structural elements throughout the Figures.

### Detailed description

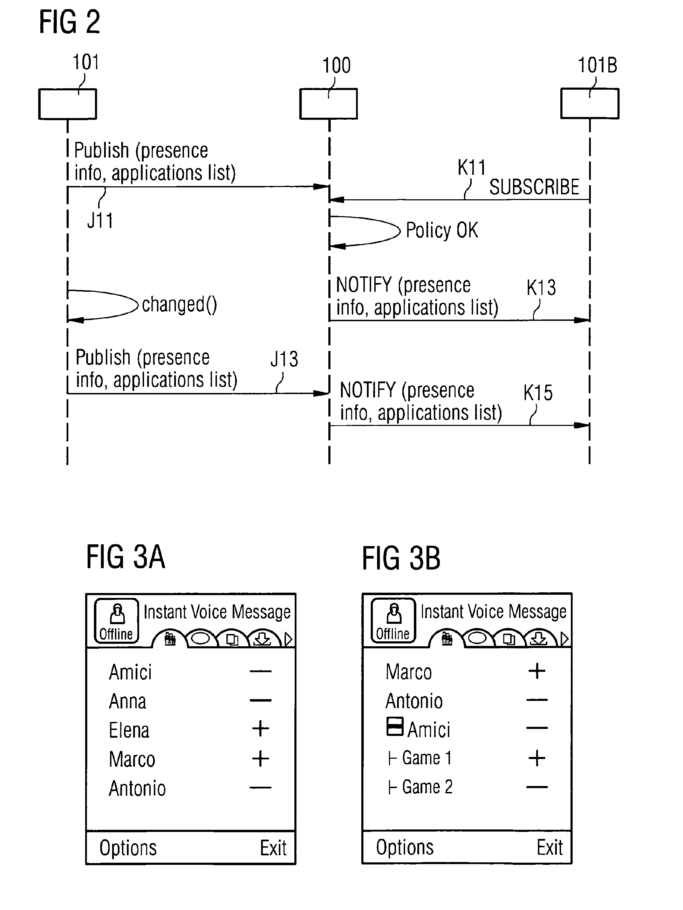

Figure 2 shows some messaging for transmitting presence information. A mobile terminal 101 generates at least one message J11 which comprises presence information of the subscriber using the mobile terminal 101. The at least one message J11 comprises, in addition to the presence information, information about which applications the subscriber has installed on the mobile terminal 101. The at least one message J11 is sent to the IMS network 100 using the SIP PUBLISH method.

Whenever the mobile terminal 101 detects that the presence data or data about applications is changed in the mobile terminal 101, it updates the presence information at the IMS network 100 by sending at least one message J13 to the IMS network 100, the at least one message J13 comprising the new presence information. The data comprised in the at least one message J13 may be similar to that comprised in the at least one message J11.

The IMS network 100 makes the information comprised in the at least one message J11 or J13 available for all watchers authorized by the subscriber using the mobile terminal 101. Preferably, the at least one message J11 (or J13, respectively) is in XML format.

The user of the mobile terminal 101 can define policies for displaying information about installed applications regardless of the current presence status of the user of the mobile terminal 101.

After the user of another mobile terminal 101B has subscribed, by sending at least one message K11 to the IMS network 100, to presence information of either the user of the mobile terminal 101 or of all users contained in his or her "buddy list", the IMS network 100, after transmits by sending at least one message K13 the presence information of the user or users. The message K13 is preferably a SIP NOTIFY message.

Before the IMS network 100 transmits the at least one message K13, it checks that the policy defined by each user allows the transmission of the presence information.

The at least one message K13 preferably comprises, in addition to information about installed applications, also an identifier that enables manual or automated downloading of the application or applications. Instead of or in addition to downloading, the identifier can also be used for displaying a symbol of the application, as shown in Figure 3B. The identifier can be in a form of a reference, especially it is a URL. After downloading and installing, the application can then be used at the mobile terminal 101B together with the user of the mobile terminal 101.

The IMS network 100 may generate the message K13 so that it offers instructions for the mobile terminal 101B to automatically carry out the download and installation.
Also highest score or official ranking can be transmitted in the at least one message J11 and thereby also in the at least one message K13.

Whenever the presence information is changed at the mobile terminal 101, i.e. whenever the mobile terminal 101 sends the at least one message J13, the IMS network 100 updates the presence information at the mobile terminal 101B by sending it a message K15 that is preferably a SIP NOTIFY message, if the subscription of the mobile terminal 101B has not expired yet.

The user of the mobile terminal 101B sees that user of the mobile terminal 100 would like to play a particular game, also when the user of the mobile terminal 101B has not installed or started it him- or herself. So the delivery of presence information including identifiers is performed regardless of whether the game is a part of the game platform or not. This principle applies to other applications than games as well.

Figures 3A shows example of user view on prior art presence information transmitted by the IMS network 100 to a mobile terminal 101B. Some users that are present, such as those available for text messaging or for using the PoC service, have been marked with a plus symbol. Those users that are absent, i.e. not present, have been marked with a minus symbol. Instead of listing all users of the IMS network 100, it may be preferable to list only those users which are contained in the "buddy list" of the user.

Figure 3B shows a user view on presence information that comprises at least one identifier identifying an application, especially a game, that has been installed on the mobile terminal 101 from which the presence information has been sent to the IMS network 100.

The application which the identifier in message J11 and K13 (or in messages J13 and K15, respectively) identifies can be a game or any other application. At the other mobile terminal 101B applications installed in the mobile terminal 101 are shown if the user of the mobile terminal 101 has allowed this. In this way, a user of a mobile terminal 101B can, prior to sending an instant message, see whether the recipient has a particular application, such as instant voice, video, or picture messaging installed.

Similarly, before the user of the mobile terminal 101B sends a document, he or she can ensure that the recipient, i.e. the user of the mobile terminal 101 can open it in the format in which the user of the mobile terminal 101B is intending to send it, and, if necessary, change the format of the document, such as from .doc to .rtf.

Instead of or in addition to the mobile terminal 101 transmitting presence information J11, J13 to the IMS network 100, it can transmit it directly this information directly to another mobile terminal 101B. The transmitting of presence information J11, J13 can thus be carried out without interaction with the IMS network 100.

Even though the examples were described using the IMS network 100 as a particular example, the skilled person appreciates that the invention is nevertheless not limited to the IMS network in particular but can be extended to any suitable network, especially any IP network.

The mobile terminals 101, 101B can be any mobile terminals. In particular, they can be UMTS (especially WCDMA) -capable mobile terminals. Alternatively or in addition to this, they may be also wireless IP (802.11b/g) -capable mobile terminals or GPRS-capable mobile terminals.

## Claims

1. A method of transmitting presence information (J11, K13; J13, K15) of a subscriber a) from a mobile terminal (101) to network (100), b) from a mobile terminal (101) to another mobile terminal (101B), or c) from network (100) to another mobile terminal (101B), the presence information (J11, K13; J13, K15) comprising at least one identifier identifying an application, especially a game, that has been installed on the mobile terminal (101).

2. A method according to claim 1, **wherein:** the transmitting of presence information (J11; J13) to the network (100) is performed using SIP PUBLISH method.

3. A method according to claim 2, **wherein:** the presence information (J11; J13) transmitted to the network (100) is made available for all mobile terminals (101B) authorized by the subscriber.

4. A method according to any one of the preceding claims, **wherein:** the presence information (J11; J13) is transmitted from the mobile terminal (101) to the network (100) encoded in XML, or the presence information (K13; K15) is transmitted from the network (100) to the other mobile terminal (101B) encoded in XML.

5. A method according to any one of the preceding claims, further **comprising the step of:** defining a policy for information about installed applications independently of the presence information.

6. A method according to any one of the preceding claims, the presence information (J11, K13; J13; K15) further **comprising:** information enabling downloading of the application, especially a reference or a URL.

7. A method according to claim 6, **wherein:** the other mobile terminal (101B) is adapted to offer the download or installation automatically.

8. A method according to claim 6, **wherein:** the other mobile terminal (101B) is adapted to offer the download or installation manually.

9. A method according to any one of the preceding claim, the presence information (J11, K13; J13; K15) further **comprising:** highest score or official ranking obtained by the user of the mobile terminal (101B).

10. A mobile terminal (101) **comprising:** means adapted to send presence information (J11, J13) to a network (100), the presence information (J11, J13) comprising at least one identifier identifying an application, especially a game, that has been installed on the mobile terminal (101).

11. A mobile terminal (101B) **comprising:** means adapted to receive presence information (K13, K15) comprising at least one identifier identifying an application, especially a game, that has been installed on another mobile terminal (101), and to display said information to the user of the mobile terminal (101B).

12. A network (100) adapted to, upon receiving a subscription message (K11) from a mobile terminal (101B), to deliver by using SIP NOTIFY method at least one message (K13, K15) comprising presence information (J11, J13) uploaded to the network (100) by another mobile terminal (101), the presence information (J11, J13) comprising at least one identifier identifying an application, especially a game, that has been installed on the other mobile terminal (101).

13. A system comprising at least a network (100) according to claim 12 and a plurality of mobile terminals (101; 101B) according to both claim 10 and claim 11, the system **c**omprising: means adapted to carry out any one of the method steps in the preceding method claims 2 to 9.
